# EUROPÄISCHE PATENTSCHRIFT

(11) **EP 1 423 231 B1**
(45) Veröffentlichungstag und Bekanntmachung des Hinweises auf die Patenterteilung: **11.05.2005**
(21) Anmeldenummer: 02797954.1
(22) Anmeldetag: 05.09.2002
(51) Int. Cl.: B23P 19/06

(54) **SCHRAUBSTATION**
SCREWING STATION
POSTE DE VISSAGE

(30) Priorität: 05.09.2001 DE 20114662 U
(43) Veröffentlichungstag der Anmeldung: 02.06.2004
(73) Patentinhaber: Cooper Power Tools GmbH & Co., 73461 Westhausen (DE)
(72) Erfinder: LUTZ, Werner, Andreas, 73467 Kirchheim/Ries (DE); MÜLLER, Herbert, 73540 Heubach (DE)
(74) Vertreter: Grünecker, Kinkeldey, Stockmair & Schwanhäusser Anwaltssozietät
(86) Internationale Anmeldenummer: PCT/EP2002/009950
(87) Internationale Veröffentlichungsnummer: WO 2003/022513

(56) Entgegenhaltungen:
- US-A- 4 581 812
- US-A- 5 123 309
- US-A- 5 993 364

## Beschreibung

Die Erfindung betrifft eine Schraubstation, insbesondere entlang einer Fertigungslinie, mit wenigstens einem Maschinengestell und einem relativ zu diesem zwischen zumindest einer Rückzugs- und einer Einsatzstellung verstellbar gelagerten Schraubwerkzeug, welches mit einer Versorgungs- und gegebenenfalls Messleitung verbunden ist.

US-5,123,309-A offenbart eine Schraubstation gemäss dem Oberbegriff des Anspruchs 1.

Solche Schraubstationen sind beispielsweise entlang Fertigungslinien bei der Automobilherstellung angeordnet. Sie dienen zur Motormontage, Getriebemontage oder dergleichen. Die Schraubstation weist ein Maschinengestell auf, das neben der Fertigungslinie angeordnet oder Teil der Fertigungslinie ist. An dem Maschinengestell sind die üblichen Einrichtungen für eine Schraubstation angeordnet, wie Grundträger, Halteträger, Schaltschrank, Bedienpult und dergleichen. Weiterhin ist dem Maschinengestell zum Transport der zu verschraubenden Werkstücke eine Transporteinrichtung für die zu verschraubenden Werkstücke zugeordnet, wie beispielsweise ein entlang von Schienen beweglicher Werkstückträger, ein Schlitten, ein Transportband oder dergleichen. Mittels dieser Transporteinrichtung wird das entsprechende Werkstück in seine Montageposition relativ zur Schraubstation bewegt und in dieser Position mittels des Schraubwerkzeuges bearbeitet Das Schraubwerkzeug wird nach entsprechender Anordnung des Werkstücks aus seiner Rückzugsposition in seine Einsatzposition bewegt, in der es beispielsweise entsprechende Schraubbolzen am Werkstück einschraubt.

Das Schraubwerkzeug ist zumindest mit einer Versorgungsleitung verbunden, über die je nach Ausbildung des Schraubwerkzeuges eine elektrische, pneumatische, hydraulische oder sonstige Versorgung zum Antreiben des Schraubwerkzeuges stattfindet Weiterhin besteht die Möglichkeit, dass das Schraubwerkzeug mit einer entsprechenden Messleitung verbunden ist, über die beispielsweise Messwertaufnehmer am Schraubwerkzeug mit einer zugehörenden Auswerteeinrichtung verbunden sind. Solche Messwertaufnehmer können ein Drehzahlaufnehmer, ein Drehmomentaufnehmer oder dergleichen sein.

Bei einer aus der Praxis vorbekannten Schraubstation wird das Schraubwerkzeug und vorzugsweise eine Anzahl solcher Schraubwerkzeuge insgesamt relativ zum Maschinengestell zwischen Rückzugs- und Einsatzstellung bewegt. Entsprechend werden ebenfalls die Versorgungsleitungen und Messleitungen mitbewegt. Die insgesamt zu bewegende Masse ist recht groß. Weiterhin ist ein aufwendiger Antrieb notwendig, um beispielsweise einen Schlitten, an dem alle Schraubwerkzeuge angebracht sind, zu bewegen. Entsprechend ist der Verschleiß und der Wartungsaufwand sowie der Energieverbrauch recht hoch.

Der Erfindung liegt daher die Aufgabe zugrunde, eine Schraubstation der eingangs genannten Art dahingehend zu verbessern, dass weniger Masse bei einem einfachen Aufbau der Schraubstation zu bewegen ist, so dass Verschleiß, Wartungsaufwand und Energieverbrauch vermindert werden. Gleichzeitig soll verhindert werden, dass die Versorgungsund Messleitungen mitbewegt werden, was sonst zu Beschädigungen der Leitungen führen könnte.

Diese Aufgabe wird im Zusammenhang mit den Merkmalen des Oberbegriffs des Anspruchs 1 dadurch gelöst, dass das Schraubwerkzeug eine am Maschinengestell gelagerte Antriebswelle und einen relativ zu dieser teleskopartig verschiebbaren Schlüsselkopf aufweist, wobei Antriebswelle und Schlüsselkopf antriebsverbunden sind und der Schlüsselkopf mittels einer Anhebe- und Absenkeinrichtung zwischen der Rückzugs- und Einsatzstellung bewegbar ist.

Erfindungsgemäß wird nur noch der Schlüsselkopf bewegt, während die übrigen Teile des Schraubwerkzeugs am Maschinengestell stationär angeordnet sind. Dadurch wird die zu bewegende Masse erheblich vermindert. Dies führt zur Energieeinsparung. Weiterhin ist kein Antrieb zur Verstellung des Schraubwerkzeugs insgesamt erforderlich. Durch den einfachen Aufbau des Schraubwerkzeugs vermindert sich weiterhin der Verschleiß und der Wartungsaufwand. Die Versorgungsleitungen und Messleitungen werden nicht mitbewegt, so dass Beschädigung dieser Leitungen weitestgehend ausgeschlossen sind.

Durch den vereinfachten und wartungsfreien Aufbau der erfindungsgemäßen Schraubstation ergibt sich außerdem eine erhebliche Kostenersparnis gegenüber der aus der Praxis bekannten Schraubstation.

Es besteht zwar die Möglichkeit, jedes Schraubwerkzeug für sich mittels einer entsprechenden Anhebe- und Absenkeinrichtung zwischen Rückzugs- und Einsatzstellung zu bewegen. Um allerdings den Aufbau weiterhin zu vereinfachen und da in der Regel mehr als ein Schraubwerkzeug für ein entsprechendes Werkstück erforderlich ist, kann die Anhebeund Absenkeinrichtung einer Anzahl von Schraubwerkzeugen zu deren gleichzeitiger Bewegung zugeordnet sein. Beispielsweise sind vier, fünf, sechs oder auch mehr Schraubwerkzeuge gleichzeitig auf diese Weise bewegbar, wobei diese Schraubwerkzeuge auch gleichzeitig zum Verschrauben eingesetzt werden können.

Die Anhebe- und Absenkeinrichtung kann in unterschiedlicherweise ausgebildet sein. Ein Beispiel ist ein Schlitten, der entlang entsprechender Führungen am Maschinengestell bewegbar gelagert ist. Von diesem Führungsschlitten können die entsprechenden Schraubwerkzeuge vorstehen. Um die Anhebe- und Absenkeinrichtung einfach und gut zugänglich zu gestalten, kann diese eine am Maschinengestell zwischen eine Anhebe- und eine Absenkposition verstellbar gelagerte Führungsplatte sein. An dieser Führungsplatte sind zumindest die Schlüsselköpfe der jeweiligen Schraubwerkzeuge gelagert und werden durch Bewegung der Führungsplatte relativ zu den zugehörigen Antriebswellen teleskopartig verstellt.

Es sind verschiedene Antriebseinrichtung zur Verstellung der Führungsplatte denkbar. Beispielsweise kann diese durch einen Elektromotor und ein entsprechendes Getriebe verstellbar sein. Eine weitere Möglichkeit zur Verstellung der Führungsplatte kann darin gesehen werden, wenn die Anhebe- und Absenkeinrichtung wenigstens eine zwischen Maschinengestell und Führungsplatte angeordnete Kolben-Zylinder-Verstelleinheit aufweist. Die Verstelteinheit kann pneumatisch oder hydraulisch betätigbar sein. Durch entsprechendes Ausschieben oder Einziehen des Kolbens der Verstelleinheit wird die Führungsplatte relativ zum Maschinengestell verstellt.

Um die Führungsplatte nicht nur durch die Kolben-Zylinder-Verstelleinheit zu führen, kann zwischen Führungsplatte und Maschinengestell wenigstens eine Führungseinrichtung angeordnet sein. Auf diese Weise kann die Führung der Führungsplatte von einem Antrieb zum Bewegen der Führungsplatte entkoppelt sein.

Da sich die Führungsplatte in der Regel gradlinig zwischen Anhebe- und Absenkposition bewegt, kann die Führungseinrichtung beispielsweise wenigstens einen Führungskolben aufweisen, durch den die Führungsplatte geführt ist.

In diesem Zusammenhang besteht die Möglichkeit, dass der Führungskolben vom Maschinengestell absteht und die Führungsplatte entlang des Kolbens gleitet. Ebenso kann der Führungskolben allerdings auch mit einem Ende an der Führungsplatte lösbar befestigt und am Maschinengestell insbesondere in einer Führungshülse längsverschieblich gelagert sein.

Der Schlüsselkopf muss zum Verschrauben ein entsprechend drehbares Teil aufweisen, wie beispielsweise eine Schraubspindel. Diese kann in einem Gehäuse, das von der Führungsplatte gehalten und mit dieser bewegt wird, drehbar gelagert sein. Um den Aufbau allerdings weiterhin zu vereinfachen, kann auch der Schlüsselkopf direkt als Schraubspindel ausgebildet sein und in der Führungsplatte drehbar gelagert sein.

Um gegebenenfalls bei Verstellung der Führungsplatte eine gewisse Relativbewegung zwischen dieser und dem Schlüsselkopf zu ermöglichen, kann der Schlüsselkopf relativ zur Führungsplatte im Wesentlichen in Längsrichtung des Schlüsselkopfes verschiebbar gelagert sein. Dadurch wird beispielsweise verhindert, dass die Führungsplatte beim Anziehen einer Schraubverbindung nachgeführt werden muss oder dass bei Bewegung der Führungsplatte in die Absenkposition die Schlüsselköpfe bei Kontakt mit dem Werkstück beschädigt werden. Stattdessen werden die Schlüsselköpfe bei Kontakt mit dem Werkstück zurückweichen und sich relativ zur Führungsplatte verschieben.

Um den Schlüsselkopf sicher zu lagern, kann dieser in einer Doppellageranordnung der Führungsplatte drehbar und in Längsrichtung teilweise verschiebbar gelagert sein.

Um bei einer Längsverschiebbarkeit des Schlüsselkopfes eine Rückstellung in eine Ausgangsstellung relativ zur Führungsplatte in einfacher Weise zu ermöglichen, kann der Schlüsselkopf in Richtung Einsatzstellung federbelastet sein. Verschiebt sich der Schtüsselkopf relativ zur Führungsplatte durch beispielsweise Kontakt mit dem Werkstück, wird er sich durch die Federbelastung selbsttätig wieder in seine Ausgangsstellung relativ zur Führungsplatte zurückbewegen, sobald er nicht mehr in Kontakt mit dem Werkstück ist.

Eine einfache technische Realisation einer solchen Federbelastung kann darin gesehen werden, wenn ein Federelement zwischen im Wesentlichen Steckschlüssel am freien Arbeitsende des Schlüsselkopfes und Unterseite der Führungsplatte angeordnet ist

Um das Federelement in einfacher Weise am Schlüsselkopf anzubringen, kann es zwischen zwei auf den Schlüsselkopf aufgesteckten Anlaufringen angeordnet sein. Ein unterer Anlaufring kann dabei dem Steckschlüssel und ein oberer Anlaufring im Wesentlichen der Unterseite der Führungsplatte zugeordnet sein und sich an dieser abstützen.

Um die Schraubstation in einfacher Weise an unterschiedliche Schraubvorgänge anpassen zu können, kann der Steckschlüssel lösbar am Arbeitsende des Schlüsselkopfes befestigt sein. In diesem Zusammenhang ist es ebenfalls möglich, dass die Anzahl und Anordnung der Schraubwerkzeuge je nach Schraubtätigkeit variierbar ist.

Um in einfacher Weise die teleskopartige Verbindung zwischen Antriebswelle und Schlüsselkopf herstellen zu können, kann der Schlüsselkopf ein im Wesentlichen rohrförmiges Schlüsselkopfgehäuse mit Innenbohrung aufweisen, in welche Innenbohrung die Antriebswelle teleskopartig verschiebbar eingreift. Beim Verstellen des Schlüsselkopfes zwischen Rückzugs- und Einsatzstellung verschiebt sich entsprechend die Antriebswelle innerhalb der Innenbohrung. Es wäre natürlich auch möglich, dass die Antriebswelle über eine entsprechende Innenbohrung verfügt, in der der Schlüsselkopf teleskopartig verschiebbar eingreift.

Um eine drehfeste Verbindung zwischen Schlüsselkopfgehäuse und Antriebswelle in einfacher Weise herzustellen, kann das Schlüsselkopfgehäuse im Wesentlichen an seinem der Antriebswelle zuweisenden Einsteckende eine Mitnehmereinrichtung zur drehfesten Verbindung von Schlüsselkopf und Antriebswelle aufweisen. Sobald die Antriebswelle mit der Mitnehmereinrichtung in Eingriff ist, ist die drehfeste Verbindung hergestellt. Die Mitnehmereinrichtung kann so ausgebildet sein, dass die drehfeste Verbindung beispielsweise nur entlang einer bestimmten Teillänge des Schlüsselkopfes zwischen Rückzugs- und Einsatzstellung gegeben ist. Allerdings ist es ebenso möglich, dass die drehfeste Verbindung entlang des gesamten Weges zwischen Rückzugs- und Einsatzstellung realisiert ist.

Eine solche Mitnehmereinrichtung kann beispielsweise durch eine Zahn- oder Keilwellenverbindung gebildet sein. Für hohe wechselnde oder stoßende Drehmomentbelastungen kann die Mitnehmereinrichtung beispielsweise eine Innenverzahnung, insbesondere Innen-Spline-Verzahnung, ausweisen, in die eine entsprechende Außenverzahnung an der Antriebswelle eingreift.

Die Mitnehmereinrichtung kann einteilig mit dem Schlüsselkopfgehäuse ausgebildet sein, indem die Innenverzahnung direkt in zumindest einem Bereich der Innenbohrung des Schlüsselkopfgehäuses ausgebildet ist. Um aber bei möglichem Verschleiß die Mitnehmereinrichtung einfach austauschen zu können, kann diese ein lösbarer Teil des Schlüsselkopfgehäuses sein.

Um Mitnehmereinrichtung und Schlüsselkopfgehäuse sicher drehfest miteinander verbinden zu können, kann die Mitnehmereinrichtung als Mitnehmerflansch mit Klauenverbindung ausgebildet sein. Durch diese Klauenverbindung ergibt sich eine drehstarre, nichtschaltbare Kupplung zwischen Mitnehmerflansch und Schlüsselkopfgehäuse.

Zur Herstellung einer entsprechenden Klauenverbindung werden wenigstens drei Klauen verwendet, wobei das Schlüsselkopfgehäuse entsprechende, komplementäre Klauenaufnahmen aufweist. Es ist allerdings auch möglich, dass weniger als drei Klauen und Klauenaufnahmen zum Einsatz kommen.

Um die Antriebswelle bei gleichzeitiger Zuordnung zu einer entsprechenden Antriebseinrichtung austauschen zu können, kann eine solche Antriebswelle an ihrem von dem Schlüsselkopfgehäuse fortweisenden Antriebsende mit einer Antriebseinrichtung am Maschinengestell bewegungsverbunden sein. Die Bewegungsverbindung kann beispielsweise über eine entsprechende schnell herstellbare Kupplungsverbindung erfolgen.

Eine Möglichkeit zur Bewegungsverbindung zwischen Antriebswelle und Antriebseinrichtung kann dadurch realisiert werden, dass auf das Antriebsende der Antriebswelle ein Halbschalensatz mit Distanzhülse aufgesteckt ist.

Um die Führungsplatte zusätzlich zu den Führungskolben zwischen Anhebe- und Absenkposition oder auch alternativ zu den Führungskolben zu führen, kann die Führungsplatte am Maschinengestell in Führungen geführt sein. Ein Beispiel für eine solche Führung sind entsprechende Schienen oder dergleichen.

Um zu verhindern, dass die Führungsplatte gegebenenfalls über Anhebe- und/oder Absenkpositionen hinausbewegt wird, kann der Führungsplatte eine Grenzpositioniereinrichtung zugeordnet sein. Diese kann als Grenzschalter, als Grenzanschlag oder dergleichen ausgebildet sein.

Als Alternative oder zusätzlich zur Kolben-Zylinder-Verstelleinheit kann die Führungsplatte im Zusammenhang mit den schienenartigen Führungen einen Verstellantrieb mit Kugelrollspindel und Elektromotor zugeordnet sein. Weitere Möglichkeiten sind ein direkter elektrischer Antrieb, ein Riemenantrieb oder dergleichen.

Um zu verhindern, dass gegebenenfalls bei Ausfall der Antriebseinrichtungen zur Verstellung der Führungsplatte zu verhindern, dass diese durch Eigengewicht in die Absenkposition verstellt wird, kann der Führungsplatte eine Verriegelungseinrichtung zumindest zur Verriegelung in der Anhebeposition zugeordnet sein.

Diese entsprechende Verriegelungseinrichtung kann dabei als Klemmeinrichtung ausgebildet sein, die beispielsweise den Kolben der Kolben-Zylinder-Verstelleinheit in einer entsprechenden Position klemmt oder auch den Führungskolben. Ebenso ist denkbar, dass die Verriegelungseinrichtung direkt auf Führungsschienen oder andere Führungen der Führungsplatte einwirkt.

Um eine Position der Führungsplatte und damit ebenfalls der Schraubwerkzeuge während der Tätigkeit der Schraubstation ermitteln und gegebenenfalls aufzeichnen zu können, kann die Kolben-Zylinder-Verstelleinheit und/oder der Führungskolben eine Abfrageeinrichtung zur Positionsbestimmung aufweisen. Eine entsprechende Abfrageeinrichtung kann ebenfalls einem elektrischen Antrieb für die Führungsplatte zugeordnet sein.

Im Folgenden werden vorteilhafte Ausführungsbeispiele der Erfindung anhand der in der Zeichnung beigefügten Figuren näher erläutert.

Es zeigen:
- Fig. 1: eine Seitenansicht eines Ausführungsbeispiels einer erfindungsgemäßen Schraubstation;
- Fig. 2: eine Draufsicht auf einen Teil der Schraubstation nach Fig. 1;
- Fig. 3: eine Vorderansicht in teilweiser Darstellung eines weiteren Ausführungsbeispiels einer Schraubstation;
- Fig. 4: eine Seitenansicht der Schraubstation nach Fig. 3, und
- Fig. 5: eine vergrößerte Darstellung eines Schraubwerkzeugs, wie es bei den Schraubstationen der vorangehenden Figuren im Einsatz ist.

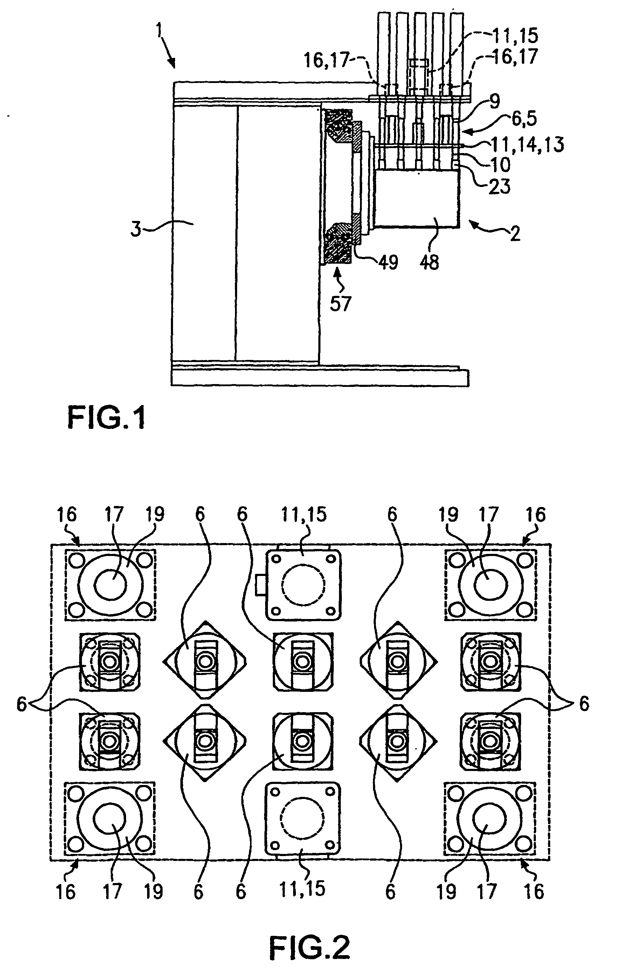

In Fig. 1 ist eine Seitenansicht einer erfindungsgemäßen Schraubstation 1 dargestellt. Diese weist ein Maschinengestell 3 auf, von dem eine Reihe von Schraubwerkzeugen 6 gehaltert sind. Das Maschinengestell 3 weist obere und untere Träger auf, zwischen denen eine Fertigungslinie 2 angeordnet ist. Entlang dieser Fertigungslinie sind verschiedene Werkstücke 48, wie Motorblock, Getriebeblock oder dergleichen transportierbar. Zum Transport dient ein Werkstückträger 49, der entlang einer Werkstückträgerführung 57 bewegbar ist. Die Werkstückträgerführung 57 ist am Maschinengestell 3 bei dem dargestellten Ausführungsbeispiel befestigt Es besteht ebenso die Möglichkeit, dass die Werkstückträgerführung 57 durch ein Transportband oder andere Führungen gebildet ist, die sich an der Schraubstation 1 vorbei und unabhängig von dieser erstrecken.

Die Schraubwerkzeuge 6 sind in Fig. 1 in ihrer Einsatzstellung 5 dargestellt In dieser Stellung sind Steckschlüssel 23 an Enden von Schlüsselköpfen 10 der Schraubwerkzeuge 6 in Eingriff mit Schraubbolzen, Muttern oder anderen festzuziehenden Verbindungsteilen. Der Schlüsselkopf 10 bildet zusammen mit einer Antriebswelle 9 das Schraubwerkzeug 6, wobei die Antriebswelle 9 mit einer entsprechenden Antriebseinrichtung, siehe die folgenden Figuren, bewegungsverbunden ist Schlüsselkopf 10 und Antriebswelle 9 sind teleskopierbar.

Die Schlüsselköpfe 10 sind durch eine Führungsplatte 14 als Teil einer Anhebe- und Absenkeinrichtung 11 hindurchgeführt und in dieser Platte zumindest drehbar gelagert. Die Führungsplatte 14 ist in ihrer Absenkstellung 13 angeordnet, so dass die Steckschlüssel 23 in Kontakt mit den Einschraubmitteln sind.

In Fig. 2 ist eine Draufsicht auf die Schraubstation 1 nach Fig. 1 insbesondere im Bereich oberhalb der Führungsplatte 14 dargestellt.

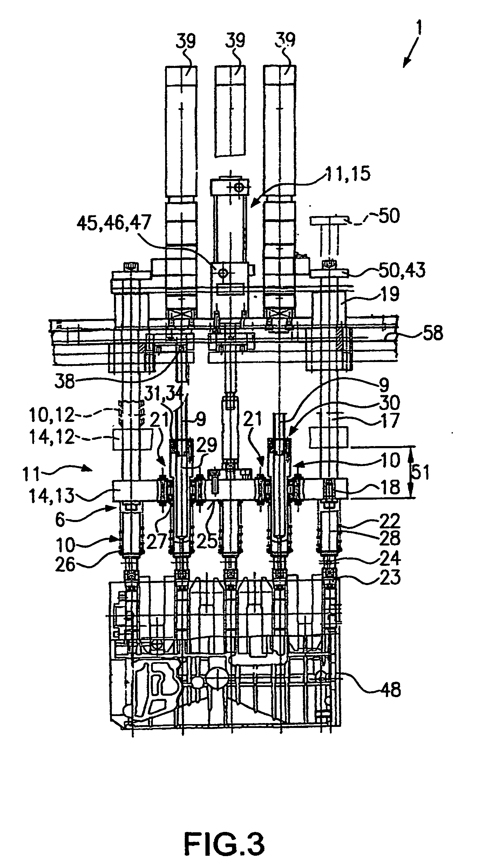

In dieser Draufsicht ist ein im Wesentlichen rechteckiger Ausschnitt dargestellt, in dem eine Reihe von Führungseinrichtungen 16, Anhebe- und Absenkeinrichtungen 11 sowie insgesamt zehn Schraubwerkzeuge 6 angeordnet sind. Die Schraubwerkzeuge sind in zwei Reihen zu je fünf Schraubwerkzeugen angeordnet, wobei die Reihen parallel zueinander angeordnet und die Schraubwerkzeuge gleichbeabstandet sind. In den vier Ecken des dargestellten Ausschnitts ist jeweils eine der Führungseinnchtungen 16 dargestellt Diese ist durch eine am Maschinengestell 3 befestigte Führungshülse 19 und ein in dieser längsverschieblich gelagerten Führungskolben 17 gebildet Die Führungskolben 17 der verschiedenen Führungseinrichtungen 16 stehen in Richtung Führungsplatte 14, siehe auch Fig. 1 und 3, vom Maschinengestell 3 ab.

Zwischen jeweils zwei Führungseinrichtungen 16 ist in etwa mittig jeweils eine Anhebe- und Absenkeinrichtung 11 angeordnet Diese ist durch eine Kolben-Zylinder Verstelleinheit 15 gebildet. Ein entsprechender Kolben dieser Verstelleinheit erstreckt sich vom Maschinengestell 3 in Richtung Führungsplatte 14 und ist dort lösbar befestigt Dies gilt analog für die Führungskolben 17.

In Fig. 3 ist eine Vorderansicht eines weiteren Ausführungsbeispiels einer Schraubstation 1 teilweise dargestellt. In dieser Figur wie in den übrigen Figuren sind gleiche Teile mit gleichen Bezugszeichen versehen und werden teilweise nur im Zusammenhang mit einer Figur erläutert

Das Ausführungsbeispiel 3 unterscheidet sich von dem nach Fig. 1 insbesondere dadurch, dass das Werkstück 48 über eine separate Vordereinrichtung, wie ein Transportband, Werkstückträger oder dergleichen, transportiert wird. Unterhalb eines Querträgers 58 des Maschinengestells 3, siehe auch Fig. 1, ist die Führungsplatte 14 in ihrer Absenkstellung 13 und gestrichelt in ihrer Anhebestellung 12 dargestellt, wobei sich zwischen diesen beiden Stellungen bzw. Positionen ein Hub 51 ergibt. Analog zur Fig. 2 sind insgesamt zwei Reihen von je fünf Schraubwerkzeugen 6 mit entsprechend vier Führungseinrichtungen 16 und zwei mittig angeordneten Anhebe- und Absenkeinrichtungen 11 dargestellt. Um eine Rückmeldung über die Position der Führungsplatte 14 zu erhalten, ist der Anhebe- und Absenkeinrichtung 11 eine Abfrageeinrichtung 47 zugeordnet. Durch diese ist die Relativstellung zwischen Kolben und Zylinder feststellbar. Weiterhin ist eine Klemmeinrichtung 46 zugeordnet, die durch lösbares Verklemmen des Zylinders die Anhebestellung 12 der Führungsplatte 14 sichert. Die Klemmeinrichtung 46 ist ein Ausführungsbeispiel für eine solche Verriegelungseinrichtung 45.

Die Führungseinrichtungen 16 weisen die Führungshülsen 19 auf, die am Querträger 58 befestigt sind. Durch die Führungshülsen 19 erstrecken sich die entsprechenden Führungskolben 17. Diese weisen an ihrem oberen Ende 50 eine Grenzpositioniereinrichtung 43 auf. Durch diese wird eine maximale Absenkposition 13 der Führungsplatte 14 bestimmt Die Grenzpositioniereinrichtung 43 ist im einfachsten Fall durch einen Ringflansch gebildet, der mit einem oberen Ende der Führungshülse 19 in Anlage bringbar ist.

Die Führungskolben 17 sind an ihrem der Führungshülse 19 fortweisenden Ende in Bohrungen der Führungsplatte 14 eingesteckt und dort beispielsweise durch Verschrauben lösbar befestigt

Weiterhin sind am Querträger 58 insbesondere die Antriebseinrichtungen 39 für die verschiedenen Schraubwerkzeuge 6 angeordnet. Bei dem dargestellten Ausführungsbeispiel ist jedem Schraubwerkzeug eine separate Antriebseinrichtung zugeordnet Dadurch ist jedes Schraubwerkzeug bezüglich Drehgeschwindigkeit und Drehmoment separat steuerbar.

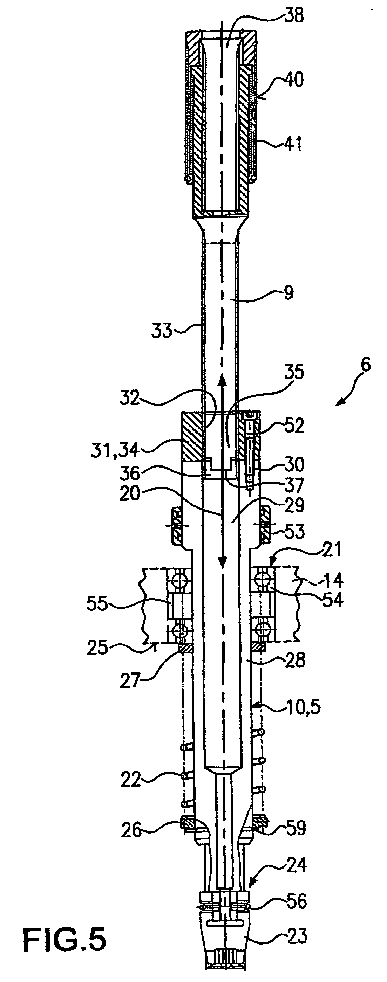

Jedes Schraubwerkzeug 6 weist die Antriebswelle 9 und den Schlüsselkopf 10 auf. Die Antriebswelle 9 ist an einem Antriebsende 38 mit entsprechend einer Antriebseinrichtung 39 bewecungsverbunden. Mit einem dem Antriebsende 38 gegenüberliegenden Ende ist die Antriebswelle 9 teleskopartig verschiebbar in einer Innenbohrung 29 eines Schlüsselkopfgehäuses 28 des Schlüsselkopfes 10 eingesteckt. An dem entsprechenden Einsteckende 30 des Schlüsselkopfgehäuses 28 weist dieses eine Mitnehmereinrichtung 31 auf, die durch einen Mitnehmerflansch 34 gebildet ist. Dieser ist am Einsteckende 30 lösbar durch eine Anzahl von Schrauben oder dergleichen befestigt. Eine drehfeste Verbindung zwischen Mitnehmerflansch und Einsteckende ist insbesondere durch eine Klauenverbindung 35, siehe insbesondere Fig. 5, realisiert.

Das Schlüsselkopfgehäuse 28 ist mittels einer Doppellageranordnung 21 in der Führungsplatte 14 drehbar und in Längsrichtung der Schraubwerkzeuge 6 verschiebbar gelagert. Die Doppellageranordnung 21 ist lösbar in der Führungsplatte 14 befestigt Unterhalb der Führungsplatte 14 und insbesondere auf deren Unterseite 25 ist ein oberer Anlaufring 27 angeordnet. Dieser ist auf das Schlüsselkopfgehäuse 28 angesteckt und an der Unterseite 25 befestigt. Zwischen dem oberen Anlaufring 27 und einem unteren Anlaufring 26 ist ein Federelement 22 angeordnet, das jedes Schlüsselkopfgehäuse 28 in Richtung zum Werkstück 28 federbeaufschlagt. Der untere Anlaufring 26 ist ebenfalls auf das Schlüsselkopfgehäuse 28 aufgesteckt und durch einen Sprengring oder dergleichen, siehe Fig. 5, gehalten.

An dieser Stelle sei angemerkt, dass die beiden Anlaufringe 26, 27 auch allein durch die Druckkraft des Federelements 22 auf Abstand behalten sein können, so dass eine feste Positionierung auf dem Schlüsselkopfgehäuse 28 nicht notwendig ist. Das heißt, die Anlaufringe 26, 27 sind nur vor einem Herabrutschen nach unten in Richtung Werkstück 48 bzw. nach oben in Richtung Querträger 58 durch Sprengring bzw. Führungsplatte 14 gesichert.

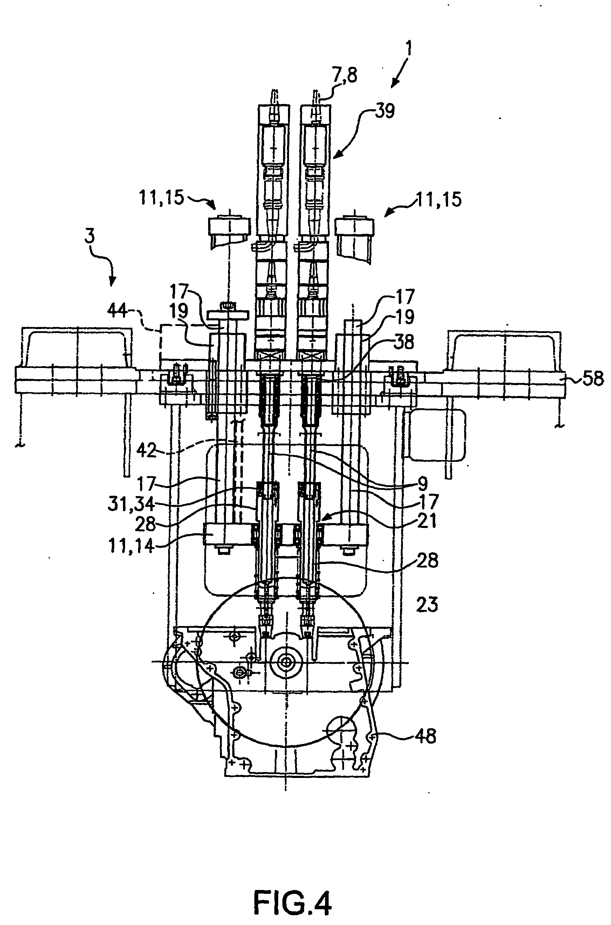

In Fig. 4 ist die Schraubstation 1 nach Fig. 3 in einer Seitenansicht dargestellt.

Insbesondere sind in dieser Figur zwei Schraubwerkzeuge aus den parallelen Reihen angeordneten Schraubwerkzeugen 6 dargestellt, siehe hierzu Fig. 2. Neben den Schraubwerkzeugen 6 sind die Führungskolben 17 angeordnet, die sich parallel zu den Schraubwerkzeugen und zueinander erstrecken.

Als alternative Führungseinrichtung 16 ist in Fig. 4 zumindest eine schienenförmige Führung 42 gestrichelt dargestellt. Statt oder auch zusätzlich zu den Führungskolben 17 erfolgt eine Führung der Führungsplatte 14 zwischen Anhebe- und Absenkstellung durch solche schienenförmigen Führungen 42. Zur Feststellung der Führungsplatte 14 entlang einer solchen Führungseinrichtung 16 sind neben oder statt der Anhebe- und Absenkeinrichtungen 11 als Kolben-Zylinder-Verstelleinheiten 15 auch andere Verstellantriebe 44 möglich, siehe die gestrichelte Darstellung oberhalb des Querträgers 58. Ein solcher alternativer Verstellantrieb 44 kann ein Elektromotor mit Kugelumlaufspindel, ein Riemenantrieb oder dergleichen sein.

Auch in Fig. 4 ist die Führungsplatte 14 in ihrer Absenkstellung 13 dargestellt, in der die Steckschlüssel 23 mit entsprechenden Einschraubmitteln am Werkstück 48 in Eingriff sind.

In Fig. 5 ist ein Schraubwerkzeug 6, wie es in den vorangehenden Ausführungsbeispielen der Schraubstation zum Einsatz kommt, vergrößert dargestellt.

Am Antriebsende 38 der Antriebswelle 9 ist auf dieser ein Halbschalensatz 40 mit der Distanzhülse 41 angeordnet Dieser dient zur Verbindung mit der entsprechenden Antriebseinrichtung 39, siehe auch Fig. 4.

Die Antriebswelle 9 weist im Wesentlichen unterhalb der Distanzhülse 41 eine Außenverzahnung 33 in Form einer Außen-Spline-Verzahnung auf. Diese ist in Eingriff mit einer entsprechenden Innenverzahnung des Mitnehmerflansches 34 als Mitnehmereinrichtung 31. Durch den Eingriff von Innen- und Außenverzahnung erfolgt eine drehfeste Kopplung zwischen Antriebswelle 9 und Schlüssetkopfgehäuse 28 bzw. Schlüsselkopf 10.

Der Mitnehmerflansch 34 ist mittels einer Anzahl von Schraubbolzen 52 am Einsteckende 30 des Schlüsselkopfgehäuses 28 befestigt. Die drehstarre Verbindung von Mitnehmerflansch 34 und Schlüsselkopfgehäuse 28 ist insbesondere durch eine Klauenverbindung 35 gebildet. Diese umfasst zwei, drei, vier oder mehr Klauen, die in entsprechende Klauenaufnahmen 37 am Einsteckende 30 des Schlüsselkopfgehäuses 28 eingreifen.

In der Innenbohrung 29 des Schlüsselkopfgehäuses 28 ist die Antriebswelle 9 frei verschieblich in Längsrichtung 20 gelagert. In Fig. 5 ist das Schlüsselkopfgehäuse 28 in seiner Einsatzstellung 5 und entsprechend die Führungsplatte 14 in Absenkstellung 13 angeordnet.

Das Schlüsselkopfgehäuse 28 weist einen unteren Abschnitt mit vermindertem Durchmesser auf, der sich von einem Messring 53 bis zum unteren Anlaufring 26 erstreckt. In diesem Abschnitt ist das Schlüsselkopfgehäuse 28 verschiebbar in der Doppellageranordnung 21 in der Führungsplatte 14 gelagert. Die Doppellageranordnung 21 ist durch zwei Kugellager 54 gebildet, zwischen denen ein Abstandsring 55 angeordnet ist. Die Doppellageranordnung 21 ist in der Führungsplatte 14 lösbar befestigt.

Mit der Unterseite 25 der Führungsplatte 14 ist der obere Anlaufring 27 in Anlage. Zwischen diesem und dem unteren Anlaufring 26 ist das Federelement 22 angeordnet. Dieses hält die Anlaufringe 26, 27 auf Abstand und in Anlage mit der Unterseite 25 bzw. mit einem Sprengring 59 am Schlüsselkopfgehäuse 28.

Am Arbeitsende 24 des Schlüsselkopfgehäuses 28 ist ein Steckschlüssel 23 mittels eines Sicherungsrings 56 lösbar befestigt.

Bei den Schraubstationen nach Erfindung ergibt sich als Vorteil, dass im Wesentlichen nur die Schlüsselkopfgehäuse 28 mit Steckschlüsseln 23 und die Führungskolben 17 als Massen bewegt werden müssen und alle übrigen Einrichtungen stationär am Maschinengestell 3 angeordnet sind. Dies gilt insbesondere auch für die Versorgungs- und Messleitung 7, 8, siehe Fig. 4. Dadurch ist die Masse der zu bewegenden Teile beim Verstellen der Schraubwerkzeuge 6 zwischen Rückzugstellung 4 und Einsatzstellung 5 erheblich vermindert. Während der gesamten möglichen Bewegung der Schlüsselkopfgehäuse 28 sind diese drehstarr mit der zugehörigen Antriebswelle 9 über die entsprechenden Verzahnungen zwischen dieser und der Mitnehmereinrichtung 31 verbunden.

## Patentansprüche

1. Schraubstation (1), insbesondere entlang einer Fertigungslinie (2), mit wenigstens einem Maschinengestell (3) und einem relativ zu diesem zwischen zumindest einer Rückzugs- und einer Einsatzstellung (4, 5) verstellbar gelagerten Schraubwerkzeug (6), welches mit einer Versorgungs- und gegebenenfalls Messleitung (7, 8) verbunden ist, wobei
das Schraubwerkzeug (6) eine am Maschinengestell (3) gelagerte Antriebswelle (9) und einen relativ zu dieser teleskopartig verschiebbaren Schlüsselkopf (10) aufweist, wobei Antriebswelle (9) und Schlüsselkopf (10) antriebsverbunden sind und der Schlüsselkopf (10) mittels einer einzigen Anhebe- und Absenkeinrichtung (11 ) zwischen Rückzugs- und Einsatzstellung (4, 5) bewegbar ist, **dadurch gekennzeichnet,**
**dass** die Anhebe - und Absenkeinrichtung (11) außerhalb des Schraubwerkzeugs (6) angeordnet ist.

2. Schraubstation nach Anspruch 1, **dadurch gekennzeichnet, dass** der Anhebe- und Absenkeinrichtung (11) zumindest eine Anzahl von Schraubwerkzeugen (6) der Schraubstation (1) zur gleichzeitigen Verstellung zugeordnet ist.

3. Schraubstation nach Anspruch 1 oder 2, **dadurch gekennzeichnet, dass** die Anhebe- und Absenkeinrichtung (11) eine am Maschinengestell (3) zwischen eine Anhebe- und eine Absenkposition (12, 13) verstellbar gelagerte Führungsplatte (14) aufweist

4. Schraubstation nach einem der vorangehenden Ansprüche, **dadurch gekennzeichnet, dass** die Anhebe- und Absenkeinrichtung (11) wenigstens eine zwischen Maschinengestell (3) und Führungsplatte (14) angeordnete Kolben-Zylinder-Verstelleinheit (15) aufweist

5. Schraubstation nach einem der vorangehenden Ansprüche, **dadurch gekennzeichnet, dass** zwischen Führungsplatte (14) und Maschinengestell (3) wenigstens eine Führungseinrichtung (16) angeordnet ist

6. Schraubstation nach einem der vorangehenden Ansprüche, **dadurch gekennzeichnet, dass** die Führungseinrichtung (16) wenigstens einen Führungskolben (17) aufweist

7. Schraubstation nach einem der vorangehenden Ansprüche, **dadurch gekennzeichnet, dass** der Führungskolben (17) mit einem Ende (18) an der Führungsplatte (14) lösbar befestigt und am Maschinengestell (3) in einer Führungshülse (19) längsverschieblich gelagert ist

8. Schraubstation nach einem der vorangehenden Ansprüche, **dadurch gekennzeichnet, dass** der Schlüsselkopf (10) in der Führungsplatte (14) drehbar gelagert ist

9. Schraubstation nach einem der vorangehenden Ansprüche, **dadurch gekennzeichnet, dass** der Schlüsselkopf (10) relativ zur Führungsplatte (14) im Wesentlichen in Längsrichtung (20) des Schlüsselkopfes verschiebbar gelagert ist.

10. Schraubstation nach einem der vorangehenden Ansprüche, **dadurch gekennzeichnet, dass** der Schlüsselkopf in einer Doppellageranordnung (21) der Führungsplatte (14) drehbar und in Längsrichtung (20) verschiebbar gelagert ist.

11. Schraubstation nach einem der vorangehenden Ansprüche, **dadurch gekennzeichnet, dass** der Schlüsselkopf (10) in Richtung Einsatzstellung (5) federbelastet ist.

12. Schraubstation nach einem der vorangehenden Ansprüche, **dadurch gekennzeichnet, dass** ein Federelement (22) zwischen im Wesentlichen Steckschlüssel (23) am freien Arbeitsende (24) des Schlüsselkopfes (10) und Unterseite (25) der Führungsplatte (14) angeordnet ist

13. Schraubstation nach einem der vorangehenden Ansprüche, **dadurch gekennzeichnet, dass** das Federelement (22) zwischen zwei auf den Schlüsselkopf (10) aufgesteckten Anlaufringen (26, 27) angeordnet ist

14. Schraubstation nach einem der vorangehenden Ansprüche, **dadurch gekennzeichnet, dass** der Steckschlüssel (23) lösbar am Arbeitsende (24) befestigt ist

15. Schraubstation nach einem der vorangehenden Ansprüche, **dadurch gekennzeichnet, dass** der Schlüsselkopf (10) ein im Wesentlichen rohrförmiges Schlüsselkopfgehäuse (28) mit Innenbohrung (29) ausweist, in welche Innenbohrung die Antriebswelle (9) teleskopartig verstellbar eingreift.

16. Schraubstation nach einem der vorangehenden Ansprüche, **dadurch gekennzeichnet, dass** das Schlüsselkopfgehäuse (28) im Wesentlichen an seinem der Antriebswelle (9) zuweisenden Einsteckende (30) eine Mitnehmereinrichtung (31) zur drehfesten Verbindung von Schlüsselkopf (10) und Antriebswelle (9) aufweist.

17. Schraubstation nach einem der vorangehenden Ansprüche, **dadurch gekennzeichnet, dass** die Mitnehmereinrichtung (31) eine Innenverzahnung (32), insbesondere Innen-Spline-Verzahnung aufweist, in die eine entsprechende Außenverzahnung (33) an der Antriebswelle (9) eingreift.

18. Schraubstation nach einem der vorangehenden Ansprüche, **dadurch gekennzeichnet, dass** die Mitnehmereinrichtung (31) ein lösbarer Teil des Schlüsselkopfgehäuses (28) ist.

19. Schraubstation nach einem der vorangehenden Ansprüche, **dadurch gekennzeichnet, dass** die Mitnehmereinrichtung (31) als Mitnehmerfiansch (34) mit Klauenverbindung (35) ausgebildet ist.

20. Schraubstation nach einem der vorangehenden Ansprüche, **dadurch gekennzeichnet, dass** die Klauenverbindung (35) wenigstens drei Klauen (36) und das Schlüsselkopfgehäuse (28) entsprechende, komplementäre Klauenaufnahmen (37) aufweist.

21. Schraubstation nach einem der vorangehenden Ansprüche, **dadurch gekennzeichnet, dass** die Antriebswelle (9) an ihrem von dem Schlüsselkopfgehäuse (28) fortweisenden Antriebsende (38) mit einer Antriebseinrichtung (39) am Maschinengestell (3) antriebsverbunden ist.

22. Schraubstation nach einem der vorangehenden Ansprüche, **dadurch gekennzeichnet, dass** auf das Antriebsende (38) der Antriebswelle (9) ein Halbschatensatz (40) mit Distanzhülse (41) aufgesteckt ist

23. Schraubstation nach einem der vorangehenden Ansprüche, **dadurch gekennzeichnet, dass** die Führungsplatte (14) am Maschinengestell (3) in Führungen (42) zwischen Anhebe- und Absenkstellung (12, 13) geführt ist

24. Schraubstation nach einem der vorangehenden Ansprüche, **dadurch gekennzeichnet, dass** der Führungsplatte (14) eine Grenzpositioniereinrichtung (43) zugeordnet ist

25. Schraubstation nach einem der vorangehenden Ansprüche, **dadurch gekennzeichnet, dass** der Führungsplatte (14) ein Verstellantrieb (44) mit Kugelspindel und Elek-tromotor zugeordnet ist

26. Schraubstation nach einem der vorangehenden Ansprüche, **dadurch gekennzeichnet, dass** der Führungsplatte (14) eine Verriegelungseinrichtung (45) zumindest zur Verriegelung in Anhebeposition (12) zugeordnet ist.

27. Schraubstation nach einem der vorangehenden Ansprüche, **dadurch gekennzeichnet, dass** die Verriegelungseinrichtung (45) als Klemmeinrichtung (46) der Kolben-Zylinder-Verstelleinheit (15) ausgebildet ist.

28. Schraubstation nach einem der vorangehenden Ansprüche, **dadurch gekennzeichnet, dass** Kolben-Zylinder-Verstelleinheit (15) und/oder Führungskolben (17) eine Abfrageeinrichtung (47) zur Positionsbestimmung aufweisen.

## Claims

1. A screwing station (1), in particular along an assembly line (2), comprising at least one machine frame (3) and a screwing tool (6) adjustably supported relative thereto between at least one retracted and one operative position (4, 5) and connected to a supply and, optionally, a measuring line (7, 8), wherein said screwing tool (6) comprises a drive shaft (9) supported on said machine frame (3) and a wrench head (10) telescopically displaceable relative to said shaft, said drive shaft (9) and said wrench head (10) being drivingly connected and said wrench head (10) being movable by a single lifting and lowering means (11) between retracted and operative position (4, 5),
**characterized in that**
said lifting and lowering means (11) is arranged exterior to said screwing tool (6).

2. The screwing station according to claim 1, **characterized in that** said lifting and lowering means (11) has assigned thereto at least a plurality of screwing tools (6) of said screwing station (1) for simultaneous adjustment.

3. The screwing station according to claim 1 or 2, **characterized in that** said lifting and lowering means (11) comprises a guide plate (14) which is adjustably supported on said machine frame (3) between a lifted and a lowered position (12, 13).

4. The screwing station according to any one of the preceding claims, **characterized in that** said lifting and lowering means (11) comprises at least one piston-cylinder adjustment unit (15) arranged between machine frame (3) and guide plate (14).

5. The screwing station according to any one of the preceding claims, **characterized in that** at least one guide means (16) is arranged between guide plate (14) and machine frame (3).

6. The screwing station according to any one of the preceding claims, **characterized in that** said guide means (16) comprises at least one guide piston (17).

7. The screwing station according to any one of the preceding claims, **characterized in that** said guide piston (17) is detachably secured with an end (18) to said guide plate (14) and supported in longitudinally displaceable fashion on said machine frame (3) in a guide sleeve (19).

8. The screwing station according to any one of the preceding claims, **characterized in that** said wrench head (10) is rotatably supported in said guide plate (14).

9. The screwing station according to any one of the preceding claims, **characterized in that** said wrench head (10) is displaceably supported relative to said guide plate (14) substantially in a longitudinal direction (20) of said wrench head.

10. The screwing station according to any one of the preceding claims, **characterized in that** said wrench head is rotatably supported in a double bearing arrangement (21) of said guide plate (14) and displaceably supported in said longitudinal direction (20).

11. The screwing station according to any one of the preceding claims, **characterized in that** said wrench head (10) is spring-biased towards said operative position (5).

12. The screwing station according to any one of the preceding claims, **characterized in that** a spring element (22) is substantially arranged between socket wrench (23) at the free work end (24) of said wrench head (10) and bottom side (25) of said guide plate (14).

13. The screwing station according to any one of the preceding claims, **characterized in that** said spring element (22) is arranged between two stop rings (26, 27) attached onto said wrench head (10).

14. The screwing station according to any one of the preceding claims, **characterized in that** said socket wrench (23) is detachably secured to said work end (24).

15. The screwing station according to any one of the preceding claims, **characterized in that** said wrench head (10) comprises a substantially tubular wrench head housing (28) with inner hole (29) which is engaged by said drive shaft (9) in telescopically adjustable fashion.

16. The screwing station according to any one of the preceding claims, **characterized in that** said wrench head housing (28) is substantially provided at its insertion end (30) facing said drive shaft (9) with a driving means (31) for the rotationally fixed connection of wrench head (10) and drive shaft (9).

17. The screwing station according to any one of the preceding claims, **characterized in that** said driving means (31) comprises an internal toothing (32), in particular internal spline toothing, which is engaged by a corresponding external toothing (33) on said drive shaft (9).

18. The screwing station according to any one of the preceding claims, **characterized in that** said driving means (31) is a detachable part of said wrench head housing (28).

19. The screwing station according to any one of the preceding claims, **characterized in that** said driving means (31) is designed as a driving flange (34) with claw connection (35).

20. The screwing station according to any one of the preceding claims, **characterized in that** said claw connection (35) comprises at least three claws (36), and said wrench head housing (28) comprises corresponding complementary claw-receiving means (37).

21. The screwing station according to any one of the preceding claims, **characterized in that** said drive shaft (9) is drivingly connected at its drive end (38) facing away from said wrench head housing (28) to a drive means (39) on said machine frame (3).

22. The screwing station according to any one of the preceding claims, **characterized in that** a shell set (40) with a spacer sleeve (41) is attached onto the drive end (38) of said drive shaft (9).

23. The screwing station according to any one of the preceding claims, **characterized in that** said guide plate (14) is guided on said machine frame (3) in guides (42) between lifted and lowered position (12, 13).

24. The screwing station according to any one of the preceding claims, **characterized in that** a limit position means (42) is assigned to said guide plate (14).

25. The screwing station according to any one of the preceding claims, **characterized in that** a displacement drive (44) with ball spindle and electric motor is assigned to said guide plate (14).

26. The screwing station according to any one of the preceding claims, **characterized in that** a locking means (45) is assigned to said guide plate (14) at least for a locking operation in said lifted position (12).

27. The screwing station according to any one of the preceding claims, **characterized in that** said locking means (45) is designed as a clamping means (46) of said piston-cylinder adjustment unit (15).

28. The screwing station according to any one of the preceding claims, **characterized in that** piston-cylinder adjustment unit (15) and/or guide piston (17) comprise a query means (47) for determining the position.

## Revendications

1. Poste de vissage (1), notamment le long d'une chaîne de fabrication (2), comportant au moins un bâti de machine (3) et un outil de vissage (6) monté de manière à être réglable par rapport à ce bâti de machine entre au moins une position rétractée et une position d'utilisation (4, 5) et qui est relié à une ligne d'alimentation et éventuellement à une ligne de mesure (7, 8), dans lequel l'outil de vissage (6) comporte un arbre d'entraînement (9), monté sur un bâti de machine (3), et une tête porte-clé (10) déplaçable de façon télescopique par rapport à cet arbre, l'arbre d'entraînement (9) et la tête porte-clé (10) étant reliés selon une liaison motrice et la tête porte-clé (10) étant déplaçable au moyen d'un dispositif unique de soulèvement et d'abaissement (11) entre la position rétractée et la position d'utilisation (4, 5), **caractérisé en ce que** le dispositif de soulèvement et d'abaissement (11) est disposé à l'extérieur de l'outil de vissage (6).

2. Poste de vissage selon la revendication 1, **caractérisé en ce qu'**au moins un nombre d'outils de vissage (6) du poste de vissage (1) sont associés, pour un réglage simultané, au dispositif de soulèvement et d'abaissement (11) .

3. Poste de vissage selon la revendication 1 ou 2, **caractérisé en ce que** le dispositif de soulèvement et d'abaissement (11) comporte une plaque de guidage (14), qui est monté sur le bâti de machine (3) de manière à être réglable entre une position de soulèvement et une position d'abaissement (12, 13).

4. Poste de vissage selon l'une des revendications précédentes, **caractérisé en ce que** le dispositif de soulèvement et d'abaissement (11) comporte au moins une unité de réglage à piston et cylindre (15) disposée entre le bâti de machine (3) et la plaque de guidage (14).

5. Poste de vissage selon l'une des revendications précédentes, **caractérisé en ce qu'**au moins un dispositif de guidage (16) est disposé entre la plaque de guidage (14) et le bâti de machine (3).

6. Poste de vissage selon l'une des revendications précédentes, **caractérisé en ce que** le dispositif de guidage (16) comporte au moins un piston de guidage (17).

7. Poste de vissage selon l'une des revendications précédentes, **caractérisé en ce** le piston de guidage (17) est fixé de façon amovible par une extrémité (18) dans la plaque de guidage (14) et est monté sur le bâti de machine (3) en étant déplaçable longitudinalement dans une douille de guidage (19).

8. Poste de vissage selon l'une des revendications précédentes, **caractérisé en ce que** la tête porte-clé (10) est montée de manière à pouvoir pivoter dans la plaque de guidage (14).

9. Poste de vissage selon l'une des revendications précédentes, **caractérisé en ce** la tête porte-clé (10) est montée de manière à être déplaçable par rapport à la plaque de guidage (14) essentiellement dans la direction longitudinale (20) de la tête porte-clé.

10. Poste de vissage selon l'une des revendications précédentes, **caractérisé en ce** la tête porte-clé est montée de manière à pouvoir tourner dans un dispositif à palier double (21) de la plaque de guidage (14) et de manière à être déplaçable dans la direction longitudinale (20).

11. Poste de vissage selon l'une des revendications précédentes, **caractérisé en ce que** la tête porte-clé (10) est chargée par un ressort en direction de la position d'utilisation (5).

12. Poste de vissage selon l'une des revendications précédentes, **caractérisé en ce qu'**un élément de ressort (22) est disposé entre essentiellement une clé à douille (23) sur l'extrémité libre de travail (24) de la tête porte-clé (10) et la face inférieure (25) de la plaque de guidage (14).

13. Poste de vissage selon l'une des revendications précédentes, **caractérisé en ce que** l'élément de ressort (22) est disposé entre deux bagues de circulation (26, 27) emmanchées sur la tête porte-clé (10).

14. Poste de vissage selon l'une des revendications précédentes, **caractérisé en ce que** la clé à douille (23) est fixée de façon amovible sur l'extrémité de travail (24).

15. Poste de vissage selon l'une des revendications précédentes, **caractérisé en ce** la tête porte-clé (10) possède un boîtier (28) de tête porte-clé de forme essentiellement tubulaire comportant un perçage intérieur (29), perçage intérieur dans lequel l'arbre d'entraînement (19) s'engage de manière à être réglable de façon télescopique.

16. Poste de vissage selon l'une des revendications précédentes, **caractérisé en ce que** le boîtier (28) de la tête porte-clé comporte essentiellement sur son extrémité d'enfichage (30) tourné vers l'arbre d'entraînement (9), un dispositif d'entraînement (31) servant à relier, solidairement en rotation, la tête porte-clé (10) et l'arbre d'entraînement (9).

17. Poste de vissage selon l'une des revendications précédentes, **caractérisé en ce que** le dispositif d'entraînement (31) comporte une denture intérieure (32), notamment une denture à cannelures intérieures, dans laquelle s'engage une denture extérieure correspondante (33) présente sur l'arbre d'entraînement (9).

18. Poste de vissage selon l'une des revendications précédentes, **caractérisé en ce que** le dispositif d'entraînement (31) est une partie amovible du boîtier (28) de la tête porte-clé.

19. Poste de vissage selon l'une des revendications précédentes, **caractérisé en ce que** le dispositif d'entraînement (31) est agencé sous la forme d'une bride d'entraînement (34) comportant une liaison à griffes (35).

20. Poste de vissage selon l'une des revendications précédentes, **caractérisé en ce** la liaison à griffes (35) comporte au moins trois griffes (36) et que le boîtier (28) de la tête porte-clé comporte des évidements complémentaires correspondants (37) pour des griffes.

21. Poste de vissage selon l'une des revendications précédentes, **caractérisé en ce que** l'arbre d'entraînement (9) est relié selon une liaison motrice, sur son extrémité d'entraînement (38) s'étendant à partir du boîtier (28) de la tête porte-clé, à un dispositif d'entraînement (39) sur le bâti de machine (3).

22. Poste de vissage selon l'une des revendications précédentes, **caractérisé en ce qu'**un ensemble (40) de demi-coques comportant une douille d'entretoisement (41) est emmanché sur l'extrémité d'entraînement (38) de l'arbre d'entraînement (9).

23. Poste de vissage selon l'une des revendications précédentes, **caractérisé en ce** la plaque de guidage (14) est guidée sur le bâti de machine (3) dans des guides (42) entre la position soulevée et la position abaissée (12, 13).

24. Poste de vissage selon l'une des revendications précédentes, **caractérisé en ce qu'**un dispositif de positionnement limite (43) est associé à la plaque de guidage (14).

25. Poste de vissage selon l'une des revendications précédentes, **caractérisé en ce qu'**à la plaque de guidage (14) est associé un dispositif d'entraînement de réglage (44) comportant une broche à billes et un moteur électrique.

26. Poste de vissage selon l'une des revendications précédentes, **caractérisé en ce qu'**un dispositif de verrouillage (45) est associé à la plaque de guidage (14) au moins pour réaliser un verrouillage dans la position soulevée (12).

27. Poste de vissage selon l'une des revendications précédentes, **caractérisé en ce que** le dispositif de verrouillage (45) est agencé sous la forme d'un dispositif de serrage (46) de l'unité de réglage à piston et cylindre (15).

28. Poste de vissage selon l'une des revendications précédentes, **caractérisé en ce que** l'unité de réglage à piston et cylindre (15) et/ou le piston de guidage (17) comportent un dispositif d'interrogation (47) pour la détermination de position.
